Europäisches Patentamt

European Patent Office

Office européen des brevets

(19)

(11) Publication number: **0 109 243**
**B1**

# (12) EUROPEAN PATENT SPECIFICATION

(45) Date of publication of patent specification: **10.09.86**

(21) Application number: **83306765.5**

(22) Date of filing: **07.11.83**

(51) Int. Cl.⁴: **B 01 J 3/04, B 22 F 3/14**

(54) Hot isostatic pressing apparatus.

(30) Priority: **06.11.82 JP 168476/82**

(43) Date of publication of application:
**23.05.84 Bulletin 84/21**

(45) Publication of the grant of the patent:
**10.09.86 Bulletin 86/37**

(84) Designated Contracting States:
**DE FR GB SE**

(56) References cited:
**AT-B- 314 212**
**DE-A-2 016 657**
**US-A-3 599 281**

(73) Proprietor: **KABUSHIKI KAISHA KOBE SEIKO SHO**
**3-18 1-chome, Wakinohama-cho Chuo-ku Kobe 651 (JP)**

(72) Inventor: **Asari, Akira**
**16-15 Ohmiya 3-chome**
**Asahi-ku Osaka (JP)**
Inventor: **Inoue, Yoichi**
**3-8-804, Taisha-cho**
**Nishinomiya Hyogo-ken (JP)**
Inventor: **Ishii, Takahiko**
**3-37-4, Kitaochiai**
**Suma-ku Kobe (JP)**

(74) Representative: **Wright, Hugh Ronald et al**
**Brookes & Martin 52/54 High Holborn**
**London WC1V 6SE (GB)**

Courier Press, Leamington Spa, England.

# Description

This invention relates to a so-called hot isostatic pressing (hereinafter abbreviated as "HIP" apparatus for sintering or densifying a ceramics or metal powder compact in a gaseous atmosphere at high temperature and high pressure, and more particularly to an HIP apparatus internally with a heat-insulating layer and a heater.

HIP treatment comprises pressing an object isotropically under elevated temperatures using an inert gas as a pressure medium, and is a technique which has attracted considerable attention in recent years from various fields as an excellent method for producing a sintered dense body from ceramic powder or metal powder or a mixture thereof, the method squeezing out residual voids to form a superhard alloy, or diffusion-bonding metal materials.

Since such an HIP treatment is carried out in an atmosphere of high temperature and high pressure, the cycle time for raising the temperature, raising the pressure, lowering the temperature and then lowering the pressure is rather long and as the HIP apparatus is a special structure the process is costly. Therefore, it has been considered to be important to shorten the cycle time as much as possible to improve the efficiency of each HIP treatment. To this end, many attempts have been made to improve the utilisation efficiency of an HIP apparatus in terms of its working hours by carrying out the heating, i.e. the temperature-raising step of an object under treatment, (which heating step requires a long period of time), in a preheating furnace and only carrying out the pressure-raising step plus an optional slight temperature-raising step in the HIP apparatus. As a representative example of such attempts, the British Patent Specification no. 1,291,459 may be mentioned. The apparatus of the above British patent certainly has the merit that the cycle time can be shortened. However, it requires a preheating furnace in addition to an ordinary highpressure and high-temperature treatment apparatus and thus increases the equipment cost, and a great deal of heat is lost due to radiation because the transportation of each preheated object is carried out in the atmosphere. Another defect is that, when loading a preheated object in the pressure cyclinder, the inner wall of the pressure cylinder underneath the preheated object is overheated due to the heat of the preheated object and this over-heating of the inner lower wall of the pressure cylinder damages the lower hermetic ring. This can be extremely dangerous as safety must be strictly pursued, even if it means the cycle time cannot be shortened. Accordingly, the present applicant has already proposed an improvement to the above apparatus in Japanese Patent 1210314 which shows an HIP apparatus which is capable of shortening the cycle time and enjoys a high level of safety without adversely affecting any parts of the apparatus such as the pressure cylinder. The features of the invention proposed in the above Japanese patent specification are that, in a high pressure and high temperature furnace comprising a pressure chamber which comprises a pressure cylinder and upper and lower plugs respectively hermetically sealing the upper and lower openings of the pressure cylinder, a heat-insulating layer disposed within the pressure chamber and a heater arranged inside the heat-insulating layer and adapted to subject an object placed on the lower plug to a treatment such as sintering or bonding in a gaseous atmosphere of high pressure and high temperature, the lower plug, heater and heat-insulating layer being adapted to be removable together from the pressure cylinder, the treatment chamber defined by the heat-insulating layer and lower plug is rendered openable, hermetic sealing means is provided with the treatment chamber, gas flow passages are provided in the lower plug so as to communicate the exterior of the lower plug respectively with the exterior and interior of the treatment chamber, and the gas flow passages communicate with each other by means of a valve. According to the above invention, it is possible not only to shorten the cycle time owing to the preheating of an object but also to minimise the heat loss of the object when carrying the pre-heated object at a high temperature into the pressure chamber. Since the inner wall of the pressure cylinder is not overheated by the heat of the preheated body the service life of the pressure cylinder can thus be prolonged, and the above HIP apparatus is safe. In addition, the preheating can be carried out in vacuo or in an atmosphere of a specific inert gas. It is possible to use, for the heater and heat-insulation layer, materials which are susceptible to oxidation at high temperature.

In the meantime, there was also developed the so-called modular HIP system in which one or more auxiliary stations which are adapted to preheat or cool and object in an inert gas atmosphere is/are combined with a single HIP apparatus as described above, the HIP apparatus and auxiliary stations being connected by a track laid horizontally therebetween, and the object and heater are, after being rapidly depressurised in the HIP apparatus and whilst still at a high temperature, unloaded together with the inert gas atmosphere from the HIP apparatus and then separately cooled in the auxiliary station or the object and heater are preheated before loading them in the HIP apparatus.

The above modular HIP apparatus has shortened the cycle time of HIP treatment to a considerable extent and produced a highly efficient HIP treatment compared with other HIP apparatus because the cooling, preheating, loading and/or unloading of objects are conducted at auxiliary stations while another object is subjected to an HIP treatment in the HIP apparatus. Thus, the modular HIP apparatus is expected to be used commercially in the future.

However, it has also been found that the above modular HIP apparatus has the following drawbacks. Namely, the heat-insulating layer of the HIP apparatus has such a high performance that the inner wall of the pressure vessel is maintained at temperatures below 100 to 200°C even when the atmosphere in the treatment chamber is, for example, at 2000°C and 2000 atmospheres. When cooling an HIP-treated object in an auxiliary station after the object has been treated in the above modular HIP system, the heat-insulating performance of the heat-insulating layer is too good and the cooling of the object requires a long period of time.

The present invention provides a hot isostatic pressing apparatus including a pressure vessel comprising: an upright pressure-resistant cylinder; upper and lower lids which hermetically fit over the upper and lower open ends of the cylinder; a heater surrounding a central chamber in the cylinder, the central chamber being adapted to receive therein an object to be treated; a heat-insulating layer interposed between the heater and the inner wall of the cylinder; means for supplying a treatment gas so as to subject the object to a hot isostatic pressing treatment in the chamber; and pressure- and temperature-controlling means; characterised in that the heat-insulating layer is formed of at least two layers including an inner layer and an outer layer, the inner layer, in use, surrounding the object and heater and is loadable into and unloadable from the pressure vessel together with the object and heater whilst maintaining the chamber, which is surrounded by the inner layer, hermetically isolated from the surrounding atmosphere, the outer layer remaining within the pressure vessel.

Since the HIP apparatus according to this invention permits one to unload the treated object and heater together with the inert gas atmosphere from the HIP apparatus after rapidly depressurising the HIP apparatus and while they are still at a high temperature and then to cool them separately at an auxiliary station, the cycle time of the HIP treatment has been shortened to a considerable extent and the efficiency of the HIP treatment has been improved considerably. In a conventional process in which an object is heated at a low pressure for a long time period in an HIP apparatus to preheat the object and the preheated object is then pressed by means of a gaseous pressure medium, the heating at low pressure in the HIP apparatus which has a structure suitable for heating the object at high pressures requires a very long periirod of time and the expensive HIP apparatus is exclusively used for the heating at low pressure during a very long period of time. In contrast to the above conventional process, the apparatus of this invention has made it possible to transfer the treatment chamber which is equipped with a built-in heater and covered with a heat-insulating layer and to effect the heating of each object at a low pressure separately in an auxiliary station. Accordingly, the time period during which the HIP apparatus is occupied by the object has also been shortened to a considerable extent, the cycle time of the HIP treatment has been shortened further, and the HIP treatment can thus be carried out with more efficiency. If a plurality of auxiliary stations and treatment chambers are provided for a single unit of HIP apparatus and the cooling, preheating, loading and/or unloading of objects are carried out in the auxiliary stations while a further object is subjected to the HIP treatment in the HIP apparatus, it is possible to load a still further object in the HIP apparatus immediately after completion of the HIP treatment of the further object and the cooling time period of the thus-treated further object in the HIP treatment can be eliminated. Therefore, the cycle time can be shortened further and the HIP treatment of many objects can be carried out semi-continuously using only one HIP apparatus. Accordingly, the HIP apparatus of this invention enables one to considerably lower the price of the product of the process.

The above described effects may be available when the HIP apparatus of this invention is incorporated in a so-called modular HIP system using auxiliary stations. Besides the above effects, the temperature of the pressure vessel can be maintained at a low level owing to the improved heat-insulation effect derived from the use of two insulation layers. This permits one to avoid the overheating of the pressure vessel and also to reduce the electricity required for the HIP treatment. In the cooling station, it is only the inner layer that is subjected to cooling. Thus, the cooling rate is accelerated and the treatment cycle time can thus be shortened further. This permits the use of fewer cooling stations and simplifies the overall HIP system.

The above and other features and advantages of the present invention will become apparent from the following description and the appended claims, taken in conjunction with the accompanying drawings in which:

Figure 1 is a part cross-sectional schematic view of a modular HIP system in which an HIP apparatus according to one embodiment of this invention has been incorporated;

Figure 2 is a schematic cross-sectional view of an HIP apparatus according to another embodiment of this invention; and

Figure 3 is a diagram showing the treatment cycle time of an HIP system making use of an HIP apparatus according to this invention in comparison with the treatment cycle time of a conventional HIP apparatus.

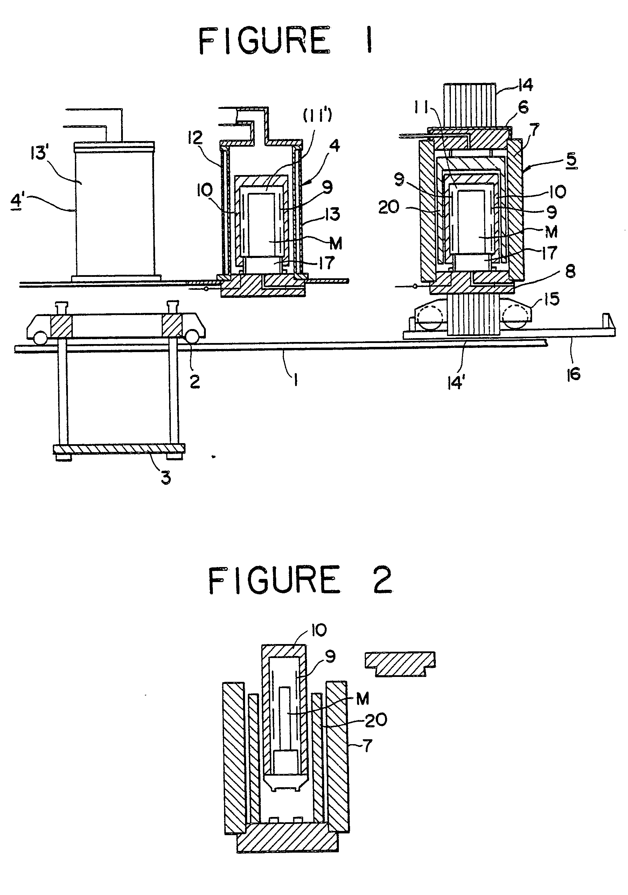

Referring first to Figure 1, a carrier car 2 is movably mounted on a track 1, the carrier car 2 mounting a support table 3 which is movable up and down by means of known or commonly-used drive means (not illustrated) such as, for example, a chain hoist, worm gear, rack or piston. A plurality of auxiliary stations 4, 4', .... and an HIP apparatus 5 are mounted in a row above the track 1. The HIP apparatus 5 consists principally of a pressure vessel which is formed of an upright and pressure-resistant cylinder 7 hermetically closed at the top thereof with an upper lid 6 including a flow passage for a gaseous pressure medium and a lower lid 8 detachably fitting over a lower part of the cylinder 7, and a treatment chamber 11 surrounded by an inverted tumbler-shaped insulating layer 10 mounted on the upper surface of the lower lid 8, received in the pressure vessel and having a heater 9 inside. The upper lid 6 and lower lid 8, when closing the pressure cylinder 7, are held under pressure between press frames 14, 14'. Because of this form of construction, the treatment chamber 11 may be taken out of the HIP apparatus 5 by removing the heat-insulating layer 10 and lower lid 8 as a combined unit from the pressure cylinder 7. The auxiliary stations 4, 4', .... each have an internal volume large enough to completely enclose the heat-insulating layer 10 therein and, if necessary, may each be provided with a dome-shaped vessel 13 which is equipped on its circumference with a jacket 12 for a cooling medium. The lower opening of the dome-shaped vessel 13 is of such a size and shape that the lower lid 8 can be fitted over the lower opening.

The inner heat-insulating layer 10, heater 9 and object M, during treatment, are loaded on the support table 3 off the carrier car 2 and may be positioned directly underneath the upright pressure-resistant cylinder 7 or one of the dome-shaped vessels 13, 13', .... by moving the carrier car 2 along the track. By operating the lifting means of the carrier car 2 at the required position, it is possible to load or unload the inner heat-insulating layer 10, heater 9 and object M in or from the pressure cylinder 7 or the one of the dome-shaped vessel 13, 13', ..... .

In Figure 1, there are illustrated three treatment chambers, namely, a first treatment chamber 11 in the HIP apparatus 5, a second treatment chamber 11' in the auxiliary station 4 and a third treatment chamber prepared for the loading of an object, two auxiliary stations 4, 4' and one HIP apparatus 5. The press frames 14, 14', which are adapted to hold the upper lid 6 and lower lid 8 of the pressure vessel under pressure, can travel on a track 16 while mounted on a car 15 and can move between an operating position and a retreating position.

Pressure and temperature controlling means, not shown, are provided to control the pressure and temperature in the HIP apparatus.

In a system having such a structure as described above, an additional heat-insulating layer 20 is provided within the HIP apparatus 5. The heat-insulating layer 20 may be supportedly suspended for example from the upper lid 6 of the pressure vessel so that it remains in the HIP apparatus even after the first treatment chamber 11 has been taken out of the pressure vessel. Accordingly, the heat-insulating layer within the pressure vessel of the HIP apparatus 5 has a double layered structure comprising an outer heat-insulating layer, i.e. the outer layer 20 and an inner heat-insulating layer, i.e. the inner layer 10.

The heat-insulating layer in the Figure is formed of only two layers, namely, the inner and outer layers but, needless to say, each of the layers 10, 20 may be in the form of a multi-layered structure.

In the illustrated embodiment, the heater, inner heat-insulating layer and object are taken out of the pressure vessel together with the lower lid 8. However, the invention includes the arrangement of Figure 2 in which the heater 9, inner heat insulating layer 10 and object M are removed from the pressure cylinder 7 through a removable upper end of the vessel as is illustrated in Figure 2.

The operation of the described apparatus according to this invention will now be described, again, with reference to Figure 1. In order to subject the object M to an HIP treatment by a normal HIP treatment means, tahe treatment chamber 11, the interior of which is kept at room temperature or at an elevated temperature, is loaded and disposed in the pressure-resistant cylinder 7 by fitting the lower lid 8 carrying the treatment chamber 11 thereon hermetically over the lower end of the pressure-resistant cylinder 7. The HIP treatment is then carried out by opening a valve to charge a gaseous pressure medium under pressure into the treatment chamber 11 from a feed line and, at the same time, continuously supplying electricity to the heater 9 to raise the interior temperature of the treatment chamber 11. The pressing is carried out at a high pressure of at least 500 atmospheres or so using as a pressure medium an inert gas such as nitrogen gas, argon gas or helium gas. The interior temperature of the treatment chamber 11 is raised to a level required to allow the material making up the object such as ceramics or metal to undergo plastic flow. The object is further densified and converted to a formed high-density body having a density close to its theoretical close-packed density by the HIP treatment.

After completion of the HIP treatment, the gaseous pressure medium is exhausted through the feed line to bring the internal pressure of the treatment chamber back to normal pressure. Then, the press frames 14, 14' are removed and the lower lid 9 is separated from the pressure-resistant cylinder 7 without waiting for a drop in temperature of the interior of the treatment chamber. Thus, the lower lid 8 is separated from the HIP apparatus 5 together with the treatment chamber 11 and the object M in the treatment chamber 11 and is then moved to the auxiliary station 4 to cool the object.

Here, the treatment chamber 11 which has been taken out of the HIP apparatus 5 as a unit with the lower lid 8 is loaded in the dome-shaped vessel 13 of the auxiliary station 4 while the interior of the treatment chamber 11 is still filled with a hot gaseous pressure medium such as an inert gas and is thus kept isolated from the surrounding atmosphere.

An atmosphere-constituting gas is then fed thorugh a feed line and thereafter discharged through an exhaust line in the same manner as described above with respect to the HIP apparatus 5, thereby maintaining the interior of the treatment chamber 11 in an inert gas atmosphere. Instead of applying electricity to the heater, a cooling medium such as water is allowed to pass through the cooling medium jacket 12 of the dome-shaped vessel 13. The atmosphere-constituting gas which has passed in through the feed line and has been heated as a result of absorbing heat from the interior of the treatment chamber 11 of the heater 9 and the like is cooled by the inner wall of the cooling medium jacket 12. It is then discharged through the exhaust line.

Such a cooling step has conventionally been carried out over a long period of time in an HIP apparatus. Since this cooling step is carried out outside the HIP apparatus itself in the present invention, the cycle time of the HIP apparatus per se can be shortened to a considerable extent and the cooling can be conducted sufficiently in the inert gas atmosphere. It thus becomes possible to use, as a material for the heating element or the like, a material which is usable but is susceptible to oxidation at elevated temperatures, such as molybedenum or the like.

Upon completion of the cooling in the above manner, the treatment chamber 11 is taken out of the dome-shaped vessel 13 and the treated object is then unloaded from the treatment chamber 11 by using the carrier car 2.

In the above description, the auxiliary station is used as a cooling station. In contrast to the above embodiment, an object M may be loaded into the auxiliary station prior to its HIP treatment so that it may be preheated there.

As has been described above, the movable treatment chamber 11 and the HIP apparatus 5 are combined in the apparatus of the present invention. After carrying out an HIP treatment and then lowering the internal pressure of the HIP apparatus to normal pressure, the treatment chamber 11 is taken out of the HIP apparatus immediately without waiting for a drop of the internal temperature, whilst holding the treatment chamber 11 in a state which is practically isolated from the external atmosphere, and is thereafter mounted in the auxiliary station where it is subjected to a cooling step. Meanwhile, another object which has already been loaded in another treatment chamber 11 in a state ready for its HIP treatment can be loaded into the HIP apparatus to carry out the HIP treatment. Therefore the period of time during which the HIP apparatus is loaded, especially the period of time during which the HIP apparatus is used to lower the temperature of the treated object can be significantly shortened, thereby making it possible to considerably shorten the cycle time of the HIP treatment. Furthermore, preheating of each object may be readily carried out by loading the treatment chamber 11 into the auxiliary station and then the treatment chamber 11 with the preheated object still enclosed therein can be loaded into the HIP apparatus for the HIP treatment of the object. Therefore, the equipment cost can be lowered to an extremely low level, the loss of thermal energy can be minimised and the cycle time of the HIP treatment can be shortened further, compared with a conventional system which requires an expensive furnace exclusively for the preheating of the object or which carries out both the preheating and the HIP treatment in the HIP apparatus itself.

In an HIP treatment process as described above, the heat-insulating layer is formed of two layers, namely, the inner layer 10 and outer layer 20 and the inner layer 10 is unloaded with the treatment chamber 11. However, the outer layer 20 remains in the HIP pressure vessel. Accordingly, the temperature of the pressure vessel itself is maintained below 100°C even when an HIP treatment is being applied to an object M, for example, at 2000°C and 2000 atmospheres. In the cooling station, the heat-insulating layer comprises the inner layer 10 only. Thus, the cooling rate of the heat-insulating layer is increased.

The treatment chamber 11 may be kept in an inert gas atmosphere even when being transferred from one station to another, provided that an air-tight casing is hermetically provided between the lower lid 8 and the inner layer 10 surrounded by the casing. In addition, it is very advantageous to provide positive cooling means at the cooling station as in the above-described embodiment of Figure 2.

The results of an operation of the apparatus will next be described. In the operation, an HIP treatment was effected using a modular HIP system equipped with an apparatus according to this invention. After the HIP treatment the resultant product, and the inner heat-insulating layer 10 were taken out of the pressure vessel at 800°C and then cooled to 200°C in the cooling station. The conventional modular HIP system (B) in which the heat-insulating layer of the HIP apparatus was not divided into two layers 10 and 20 took 11 hours to cool the product from 800°C to 200°C while the modular HIP system (A) making use of an HIP apparatus according to this invention which employed a heat-insulating layer divided into two layers 10 and 20 needed only 5.5 hours to effect the same degree of cooling. Thus, the cooling time has been significantly shortened.

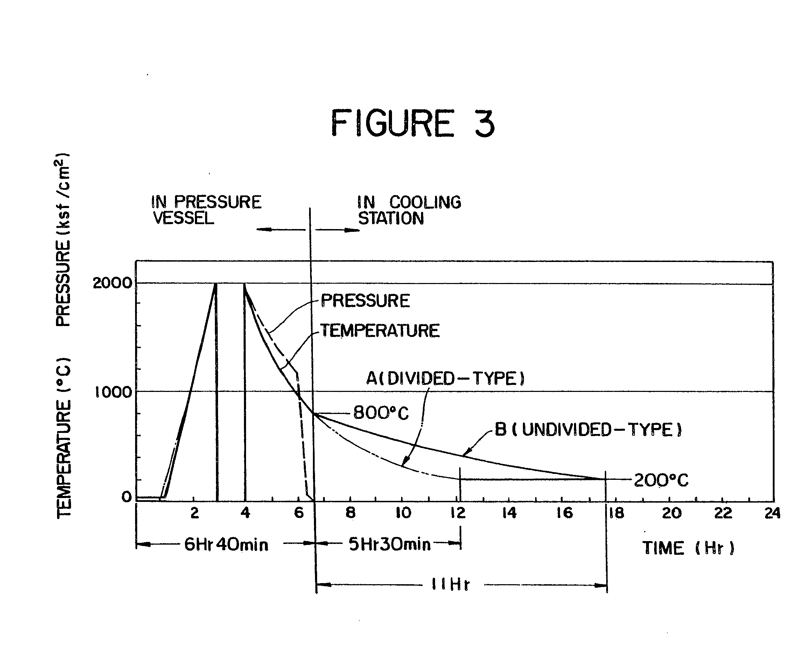

Figure 3 diagrammatically illustrates the above difference.

Having now fully described the invention, it will be apparent to one of ordinary skill in the art that many changes and modifications can be made thereto without departing from the scope of the invention as set forth in the claims.

**Claims**

1. A hot isostatic pressing apparatus including a pressure vessel (5) comprising; an upright pressure-resistant cylinder (7); upper (6) and lower (8) lids which hermetically fit over the upper and lower open ends of the cylinder (7); a heater (9) surrounding a central chamber in the cylinder (7), the central chamber being adapted to receive therein an object (M) to be treated; a heat-insulating layer (10, 20) interposed between the heater (9) and the inner wall of the cylinder (7);

means for supplying a treatment gas so as to subject the object (M) to a hot isostatic pressing treatment in the chamber; and pressure- and temperature- controlling means; characterised in that the heat-insulating layer (10, 20) is formed of at least two layers (10, 20) including an inner layer (10) and an otuer layer (20); the inner layer (10), in use, surrounding the object (M) and heater (9) and is loadable into and unloadable from the pressure vessel (5) together with the object (M) and heater (9) whilst maintaining the chamber, which is surrounded by the inner layer (10), hermetically isolated from the surrounding atmosphere, the outer layer (20) remaining within the pressure vessel (5).

2. A hot isostatic pressure apparatus as claimed in claim 1, characterised in that the object (M), heater (9) and inner layer (10) are loadable into and unloadable from the pressure vessel (5) together with the lower lid (8) while maintaining the chamber, which is surrounded by the inner layer (10), hermetically isolated from the surrounding atmosphere.

3. A hot isostatic pressing apparatus as claimed in claim 1, characterised in that the object (M), heater (9) and inner layer (10) together are, loadable into and unloadable from the pressure vessel (5) through the upper opening of the pressure vessel (5) while maintaining the chamber, which is surrounded by the inner layer (10), hermetically isolated from the surrounding atmosphere.

## Patentansprüche

1. Isostatische Heißpressvorrichtung, die einen Druckbehälter (5) umfaßt, mit einem aufrechtstehenden druckbeständigen Zylinder (7), oberen (6) und unteren (8) Deckeln, welche hermetisch über das obere und das untere offene Ende des Zylinders (7) passen, einer Heizeinrichtung (9), welche eine zentrale Kammer im Zylinder (7) umschließt, wobei die zentrale Kammer zur Aufnahme eines zu behandelnden Objektes (M) bestimmt ist, einer zwischen der Heizeinrichtung (9) und der Innenwand des Zylinders (7) angeordneten Wärmeisolierschicht (10, 20), Einrichtungen zum Zuführen eines Behandlungsgases, um das Objekt (M) einer isostatischen Heißpressbehandlung in der Kammer zu unterwerfen, und mit Überwachungseinrichtungen für Druck und Temperatur, dadurch gekennzeichnet, daß die Wärmeisolierschicht (10, 20) aus wenigstens zwei Schichten (10, 20) mit einer inneren Schicht (10) und einer äußeren Schicht (20) gebildet ist, wobei die innere Schicht (10) im Betrieb das Objekt (M) und die Hiezeinrichtung (9) umschließt und zusammen mit dem Objekt (M) und der Heizeinrichtung (9) in den Druckbehälter (5) einzusetzten und aus diesem zu entfernen ist, wobei die von der inneren Schicht (10) umschlossene Kammer hermetische isoliert von der äußeren Atmosphäre ist, während die äußere Schicht (20) in dem Druckbehälter (5) verbleibt.

2. Isostatische Heißpressvorrichtung nach Anspruch 1, dadurch gekennzeichnet, daß das Objekt (M), die Heizeinrichtung (9) und die innere Schicht (10) zusammen mit dem unteren Deckel (8) in den Druckbehälter (5) eingesetzt und aus demselben herausgenommen werden kann, wobie die Kammer, welche von der inneren Schicht (10) umschlossen ist, hermetische von der umgebenden Atmosphäre isoliert ist.

3. Isostatische Heißpressvorrichtung nach Anspruch 1, dadurch gekennzeichnet, daß das Objekt (M), die Heizeinrichtung (9) und die innere Schicht (10) zusammen durch die obere Öffnung des Druckbehälters (5) in den Druckbehälter (5) eingesetzt und aus diesem herausgenommen werden kann, wobei die von der inneren Schicht (10) umschlossene Kammer hermetisch von der Umgebenden Atmosphäre isoliert bleibt.

## Revendications

1. Presse isostatique à chaud comporant un récipient de compression (5) comprenant: un cylindre vertical (7) résistant à la pression; des couvercles supérieur (6) et inférieur (8) qui s'adaptent hermétiquement sur les extrémités ouvertes supérieure et inférieure de cylindre (7); un dispositif de chauffage (9) entourant une chambre central intérieure au cylindre (7), la chambre centrale étant propre à recevoir à l'intérieur un object (M) à traiter; une couche d'isolation thermique (10, 20) interposée entre le dispositif de chauffage (9) et la paroi intérieure du cylindre (7); des moyens assurant l'amenée d'un gaz de traitement de façon à soumettre l'objet (M) à un traitement de compression isostatique à chaud dans la chambre; et des moyens de réglage de la pression et de la température; caractérisé en ce que la couche d'isolation thermique (10, 20) est formée d'au moins deux couches (10, 20) comportant une couche intérieure (10) et une couche extérieure (20); la couche intérieure 10 entourant, en service, l'objet et le dispositif chauffant et pouvant être chargée dans le récipient de compression (5) et en être déchargée en même temps que l'objet (M) et que le dispositif de chauffage (9) tandis que la chambre, entourée par la couche intérieure (10), est maintenue hermétiquement isolée de l'atmosphère ambiante, la couche extérieure (20) demeurant dans le récipient de compression (5).

2. Presse isostatique à chaud selon la revendication 1, caractérisée en ce que l'objet (M), le dispositif de chauffage (9) et la couche intérieure (10) peuvent être chargés dans le récipient de compression (5) et en être déchargés en même temps que le couvercle intérieure (8) tandis que la chambre, entourée par la couche intérieure (10), est maintenue hermétiquement isolée de l'atmosphère ambiante.

3. Presse isostatique à chaud selon la revendication 1, caractérisé en ce que l'objet (M), le dispositif de chauffage (9) et la couche intérieure (10) peuvent être conjointement chargés dans le récipient de compression (5) et déchargés de celui-ci par l'ouverture supérieure du récipient de compression (5) tandis que la chambre, entourée par la couche intérieure (10), est maintenue hermétiquement isolée de l'atmosphère ambiante.

FIGURE 1

FIGURE 2

# FIGURE 3

IN PRESSURE VESSEL

IN COOLING STATION

PRESSURE (ksf /cm²)

TEMPERATURE (°C)

2000

1000

0

PRESSURE

TEMPERATURE

A(DIVIDED—TYPE)

800°C

B ( UNDIVIDED—TYPE )

200°C

2  4  6  8  10  12  14  16  18  20  22  24

6Hr 40min ── 5Hr 30min

11Hr

TIME ( Hr )